## Europäisches Patentamt
## European Patent Office
## Office européen des brevets

(19)

(11) Numéro de publication: **0 203 876**
**B1**

(12)

# FASCICULE DE BREVET EUROPEEN

(45) Date de publication du fascicule du brevet:
26.07.89

(51) Int. Cl.⁴: **F16L 37/22**

(21) Numéro de dépôt: **86420132.2**

(22) Date de dépôt: **20.05.86**

(54) Perfectionnement aux coupleurs à clapets visant à faciliter le retour des billes de verrouillage en position de verrouillage.

(30) Priorité: **21.05.85 FR 8507820**

(43) Date de publication de la demande:
**03.12.86 Bulletin 86/49**

(45) Mention de la délivrance du brevet:
**26.07.89 Bulletin 89/30**

(84) Etats contractants désignés:
**AT BE CH DE GB IT LI LU NL SE**

(56) Documents cités:
**DE-A- 3 238 410**
**FR-A- 2 247 662**
**US-A- 2 926 934**
**US-A- 3 613 726**

(73) Titulaire: **PARKER HANNIFIN RAK, Z.I. du Mont Blanc,
F-74100 Annemasse(FR)**

(72) Inventeur: **Veyrat Alain, 18 rue Henri Dunant,
Ville-la-Grand F-74100 Annemasse(FR)**

(74) Mandataire: **Maureau, Pierre et al, Cabinet GERMAIN &
MAUREAU B.P. 3011, F-69392 Lyon Cédex 03(FR)**

ACTORUM AG

## Description

La présente invention concerne un perfectionnement aux coupleurs à clapets visant à faciliter le retour des billes de verrouillage en position de verrouillage.

Cette invention concerne donc les coupleurs à clapets du type comportant un corps tubulaire externe équipé, à l'une de ses extrémités, de moyens de raccordement rigide à une source de fluide sous pression et logeant un élément tubulaire axialement mobile dans les deux sens et dont l'extrémité avant correspondant à l'extrémité libre du corps tubulaire, qui constitue l'embout femelle du coupleur, porte, dans une rangée annulaire de perforations leur servant de logements, des billes de verrouillage destinées à être engagées et maintenues dans une gorge annulaire externe prévue, à cet effet, au voisinage de l'extrémité de l'embout mâle associé du coupleur, un ressort de rappel tendant à ramener ce: élément tubulaire dans une position intermédiaire stable dans laquelle la rangée annulaire de perforations logeant les billes de verrouillage coïncide axialement avec une nervure radiale interne à flancs coniques du corps tubulaire pour maintenir les billes en position de verrouillage, c'est-à-dire en saillie radialement à l'intérieur de l'alésage de mobile et ce dernier portant, du côté de son extrémité arrière un clapet normalement maintenu fermé par un ressort et destiné à être reculé en position ouverte par le clapet de l'embout mâle, lorsque ce dernier est engagé dans l'embout femelle.

On conçoit aisément que, dans ce type de coupleur, un déplacement axial de l'élément tubulaire interne dans un sens ou dans l'autre, depuis sa position intermédiaire stable, en éloignant les billes de la nervure interne du corps, permet leur déplacement radialement à l'extérieur jusqu'à la libération totale de son alésage.

Cette disposition permet donc de verrouiller l'embout mâle dans l'embout femelle par simple engagement en force à l'encontre de la pression du ressort de rappel de l'élément tubulaire interne et de la pression du fluide d'alimentation qui agit sur le clapet de l'embout femelle. Inversement, une simple traction exercée à l'encontre de la seule force du ressort précité sur l'embout mâle permet aussi de le désaccoupler de l'embout femelle.

Ce type de coupleur présente donc l'avantage d'être manœuvrable d'une seule main. Dans les coupleurs connus de ce type, le maintien de l'élément tubulaire interne dans sa position intermédiaire stable est obtenu à l'aide d'un ressort de rappel entourant cet élément et normalement précomprimé entre deux épaulements extérieurs opposés de cet élément et deux épaulements internes, opposés et à même distance l'un de l'autre que les premiers, prévus dans l'alésage du corps, la position dans laquelle les deux paires d'épaulements intérieurs et extérieurs coïncident correspondant à la position de verrouillage des billes.

En pratique, et pour des raisons de possibilités de fabrication, au moins certains des épaulements précités sont constitués par des bagues vissées ou circlips rapportés qui renchérissent Les coûts de fabrication et de montage de ces coupleurs. En outre, dans certaines conditions d'utilisation et notamment dans le cas de forte pression du fluide d'alimentation, l'accouplement est rendu très difficile voire impossible à réaliser manuellement, car la force exercée radialement vers l'intérieur sur les billes par la rampe postérieure de la nervure interne du corps exige un léger mouvement. vers l'avant de l'élément tubulaire interne et par conséquent de retrait de l'embout mâle et risque donc d'intervenir trop tard, la gorge annulaire de l'embout mâle n'étant plus en correspondance de la rangée annulaire des billes.

En outre, s'il existe dans la canalisation d'utilisation, c'est-à-dire en aval du clapet de l'embout mâle, une pression résiduelle, celle-ci a tendance, dès l'ouverture de ce clapet, à chasser les billes radialement vers l'extérieur et par conséquent à s'opposer à leur chute dans la gorge de l'embout mâle.

La présente invention vise à remédier à tous ces inconvénients. A cet effet, dans le coupleur qu'elle concerne et qui est du type précité, la partie de l'élément tubulaire mobile comprise entre la rangée annulaire de perforations logeant les billes de verrouillage et l'épaulement externe le plus proche de cet élément tubulaire, servant d'appui à l'extrémité avant de son ressort de rappel est entourée par une douille cylindrique présentant, à son extrémité arrière, c'est-à-dire la plus éloignée de la rangée de perforations une collerette annulaire interne placée entre l'épaulement externe avant et l'extrémité avant du ressort de rappel de manière à être normalement maintenue appliquée, par ce ressort contre l'épaulement externe de l'élément tubulaire mobile dont l'autre extrémité, normalement maintenue en appui contre le flanc conique interne de la nervure interne du corps est biseautée intérieurement de façon à présenter une facette divergente, la longueur de la jupe cylindrique de cette douille étant légèrement supérieure à la distance séparant l'épaulement considéré de la circonférence des perforations logeant les billes.

Ainsi, lorsque l'élément tubulaire mobile est repoussé à l'intérieur du corps par suite de l'engagement de l'embout mâle, l'action des billes repoussées radialement vers l'extérieur par l'embout mâle contre la facette biseautée de la douille provoque un recul et, par conséquent, un effacement de cette dernière, à l'encontre de la force du ressort de rappel, permettant aux billes de libérer totalement l'alésage de l'élément tubulaire mobile. Par contre, lorsque la gorge de l'embout mâle se présente à l'intérieur de la rangée annulaire de perforations logeant les billes, ces dernières cessent leur action contre la facette biseautée de la douille et le ressort de rappel tend à ramener la douille dans sa position normale précitée de sorte que sa facette biseautée exerce alors sur les billes une action tendant à les repousser radialement à l'intérieur et par conséquent à les faire tomber dans la gorge de l'embout mâle, sans attendre le mouvement de retour de l'élément tubulaire mobile et l'action sur les billes du flanc conique interne de la nervure interne du corps.

De toute façon, l'invention sera bien comprise à l'aide de la description qui suit, en référence au dessin schématique annexé représentant, à titre d'exemple un coupleur muni de ce perfectionnement:

Figure 1 en est une vue de côté en élévation avec demi-coupe axiale, montrant le corps de ce coupleur avec son embout femelle au repos, avant engagement de l'embout mâle;

Figure 2 est une vue similaire à figure 1 montrant ce coupleur au début de l'engagement de l'embout mâle, l'embout femelle étant toujours en position normale de repos;

Figure 3 est une vue similaire aux figures 1 et 2 montrant ce coupleur en fin d'engagement de l'embout mâle, juste avant son verrouillage effectif dans l'embout femelle;

Figure 4 est une vue similaire aux figures 1 à 3 montrant l'embout mâle et l'embout femelle de ce coupleur verrouillés l'un dans l'autre.

Comme le montre le dessin, le coupleur auquel s'applique le perfectionnement de l'invention est un coupleur à clapets d'un type connu, comportant un corps tubulaire externe (2) muni, à son extrémité postérieure (2"), d'un embout fileté (3) équipé d'un joint torique (4) permettant son raccordement étanche à une source de fluide sous pression, non représentée sur le dessin.

Dans l'exemple illustré sur le dessin, pour des raisons de possibilités de montage, le corps tubulaire (2) est en fait composé de deux éléments coaxiaux, l'un antérieur (2a), l'autre postérieur (2b), assemblés bout à bout à l'aide d'une bague intérieure filetée (5).

Au voisinage de son extrémité antérieure (2'), le corps tubulaire (2) présente une nervure radiale interne (6) à flancs coniques, l'un interne (6a) et l'autre externe (6b), dont la fonction sera expliquée ultérieurement.

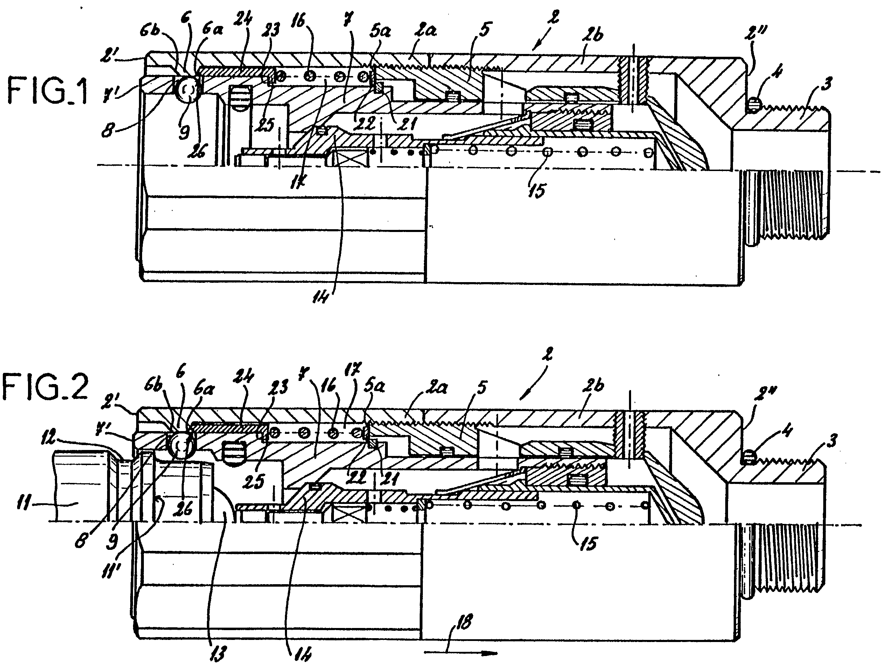

A l'intérieur du corps (2) est monté, axialement mobile dans les deux sens, un élément tubulaire interne (7) dont l'extrémité antérieure (7') correspondant à l'extrémité antérieure (2') du corps (2) constitue l'embout femelle du coupleur et porte, dans une rangée annulaire de perforations (8) leur servant de logements, des billes de verrouillage (9) normalement maintenues en saillie radialement à l'intérieur de l'alésage de l'extrémité antérieure (7') de l'élément tubulaire (7) par la nervure (6) du corps (2), le diamètre des billes (9) étant supérieur à l'épaisseur de la paroi de l'élément tubulaire (7) dans la zone de la rangée annulaire de perforations (8). Il faut noter que chaque perforation (8) présente, à son extrémité radialement interne, un rétreint s'opposant au libre passage des billes (9). Ces billes sont destinées à verrouiller, de manière connue en soi, l'embout mâle (11) de ce coupleur, visible sur les figures 2 à 4, par engagement dans une gorge périphérique externe (12) prévue au voisinage de l'extrémité libre de l'embout mâle (11).

A chacun des embouts mâle (11) et femelle (7') de ce coupleur est associé un clapet, respectivement (13) et (14), normalement maintenu en position de fermeture par un ressort de rappel. Sur le dessin, seul le ressort de rappel (15) du clapet (14) associé à l'embout femelle (7') est visible. Chacun de ces clapets (13) et (14) est destiné à prendre appui contre l'autre clapet lors de l'engagement de l'embout mâle (11) dans l'embout femelle (7') de manière à provoquer son ouverture et son maintien en position d'ouverture tant que l'embout mâle (11) reste verrouillé dans l'embout femelle (7').

Un ressort (16), entourant l'élément tubulaire mobile (7) et par conséquent logé dans un intervalle annulaire (17) séparant l'élément tubulaire (7) du corps (2), tend à maintenir ce dernier dans une position intermédiaire stable, illustrée sur les figures 1, 2 et 4, position dans laquelle les rangées annulaires de perforations (8) coïncident axialement avec la nervure (6) et par conséquent dans laquelle les billes (9) sont maintenues par la nervure (6) en position radialement intérieure de verrouillage.

A cet effet, le ressort (16) prend appui contre deux paires d'épaulements équidistants en regard l'un de l'autre, l'une de ces paires étant ménagée sur la face cylindrique externe de l'élément tubulaire mobile (7) tandis que l'autre paire est ménagée dans la face cylindrique interne du corps tubulaire (2).

L'épaulement le plus intérieur, c'est-à-dire le plus proche du raccord fileté (3) du corps (2) de chacune de ces paires d'épaulements, est constitué, de façon connue en soi, par la face antérieure d'un circlips (21) porté par l'élément tubulaire (7) et par la face antérieure (5a) de la bague (5) précitée, ces deux épaulements constituant les épaulements postérieurs d'appui du ressort de rappel (16). Pour assurer un appui régulier de ce ressort contre ces deux épaulements, une rondelle (22) est interposée entre eux et l'extrémité postérieure du ressort (16).

A une distance déterminée du circlips (21) et en avant de ce dernier, l'élément tubulaire (7) présente un épaulement antérieur externe (23) en regard de l'épaulement postérieur constitué par le circlips (21).

Selon le perfectionnement de l'invention, l'élément tubulaire (7) porte, sur sa partie comprise entre l'épaulement (23) et la rangée annulaire de perforations (8), une douille cylindrique (24) de longueur légèrement supérieure à la distance séparant l'épaulement (23) de la rangée annulaire de perforations (8). A son extrémité postérieure, la douille (24) porte une collerette interne (25) normalement maintenue en appui, par le ressort (16), contre l'épaulement (23) de l'élément tubulaire (7). L'extrémité antérieure de la douille (24) est biseautée intérieurement de manière à présenter une facette tronconique divergente (26).

Lorsque le coupleur est au repos, c'est-à-dire avant engagement de l'embout mâle (11), comme l'illustrent les figures 1 et 2, le ressort (16) maintient la collerette (25) de la douille (24) en appui contre l'épaulement (23) de l'élément tubulaire (7) et l'extrémité antérieure biseautée de la douille (24) en appui contre le flanc interne (6a) de la nervure (6) qui joue, en combinaison avec la douille (24), le rôle du second épaulement de la paire d'épaulements associés au corps tubulaire (2). Les figures 1 et 2 montrent donc l'élément tubulaire (7) axialement mobile dans les deux sens, dans sa position intermédiaire stable correspondant à la position de verrouillage des billes (9)

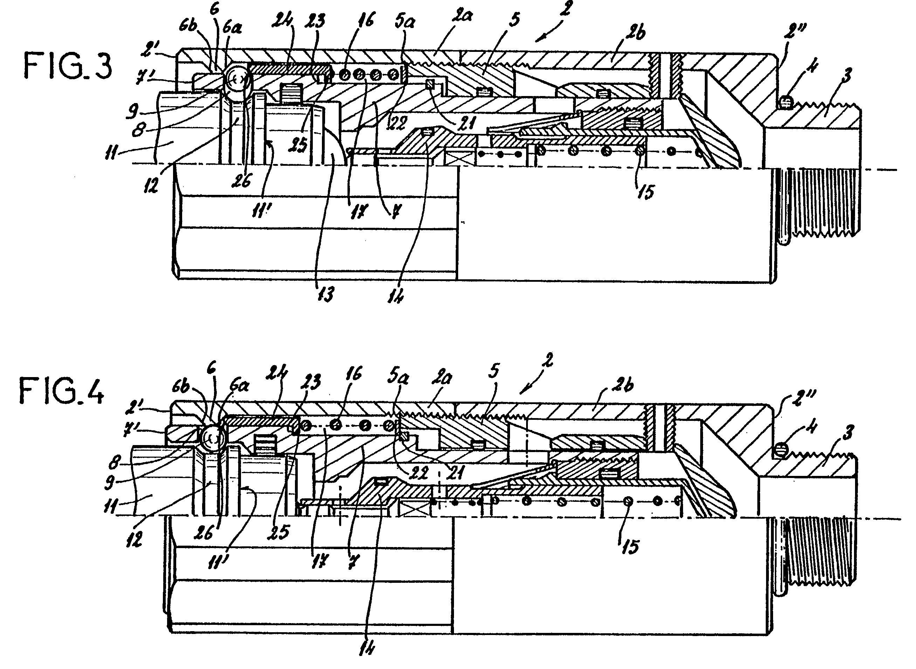

Lors de l'engagement de l'embout mâle (11) dans l'embout femelle (7'), un épaulement (11') de même diamètre que l'alésage de l'embout femelle (7') provoque le recul, dans le sens de la flèche (18), de l'élément tubulaire mobile (7) en prenant appui contre les billes (9) qui ne peuvent pas s'effacer en raison de la présence de la nervure (6) du corps (2). Ce recul de l'élément tubulaire (7) à l'encontre de la force du ressort (16) qui se comprime a pour effet de décaler la rangée de perforations (8) à l'intérieur du corps (2) par rapport à la nervure (6), autorisant alors les billes (9) à s'effacer par rapport à l'alésage de l'embout femelle (7') en étant refoulées radialement à l'extérieur, comme illustré sur la figure 3. Cet effacement des billes (9) autorise l'engagement de l'embout mâle (11) à l'intérieur de l'embout femelle (7') jusqu'à ce que la gorge (12) de l'embout mâle (11) soit au-dessous de la rangée annulaire de billes (9).

Comme on le voit nettement sur la figure 3, pour que le flanc conique (6a) de la rainure (6) puisse jouer son rôle de rampe de renvoi à l'égard des billes (9), il est nécessaire qu'après avoir dépassé la position axiale de la nervure (6), la gorge (12) soit reculée, ainsi que l'embout mâle (11) et l'élément tubulaire mobile (7).

En conséquence, en l'absence de la douille (24), rien ne provoquerait la chute des billes (9) dans la gorge (12) avant un début de course de retour de l'élément tubulaire (7) autorisant l'entrée en contact des billes (9) avec la rampe de renvoi que constitue le flanc interne (6a) de la nervure (6).

Comme indiqué précédemment, cette opération risque d'être difficile voire impossible à exécuter, notamment s'il demeure dans le circuit d'alimentation une pression résiduelle importante.

Le rôle de la douille (24) est d'imposer aux billes (9) un mouvement radial vers l'intérieur dès que la gorge (12) se présente en-dessous d'elles.

Or, comme le montre la figure 3, lors du passage sous les billes (9) du grand diamètre entourant l'épaulement (11') de l'embout mâle (11), les billes sont refoulées, d'une part, radialement sur l'extérieur et, d'autre part, axialement, dans le sens de la flèche (18), avec l'élément tubulaire (7). Au cours de ces deux mouvement combinés, les billes (9) prennent appui contre la facette biseautée (26) de la douille (24), provoquant son refoulement à l'encontre de la pression du ressort (16) et par conséquent le décollement de la collerette (25) par rapport à l'épaulement (23) de l'élément tubulaire (7), comme illustré sur la figure 3. L'observation de cette figure 3 montre que la pression axiale exercée par le ressort (16) sur la douille (24) est transmise aux billes (9) par l'intermédiaire de la facette biseautée (26) de la douille (24), ce qui engendre sur les billes (9), qui ne peuvent pas reculer par rapport à l'élément tubulaire (7) puisque logées dans les perforations (8), un déplacement dirigé radialement vers l'intérieur les obligeant à tomber dans la gorge (12) de l'embout mâle (11) dès que celle-ci se présente au-dessous d'elles.

Ce résultat est obtenu même avec un ressort (16) de faible force. Par exemple, avec une pression résiduelle à l'intérieur d'un circuit d'alimentation de l'ordre de 15 à 20 bars, un ressort (16) de 15 à 20 kgf (147 à 196 N) est largement suffisant.

Pour désaccoupler l'embout mâle (11) de l'embout femelle (7'), il suffit d'exercer sur l(embout mâle (11), une traction dans le sens inverse de la flèche (18), ce qui a pour effet de déplacer l'élément tubulaire (7) dans le même sens et, par conséquent, d'amener la rangée annulaire de billes (9) en avant de la nervure interne (6) du corps (2) et de permettre ainsi l'effacement des billes (9) par rapport à l'alésage de l'embout femelle (7) par déplacement radialement à l'extérieur. Dans cette opération, la douille (24) ne joue aucun rôle.

## Revendications

Coupleur à clapets visant à faciliter le retour des billes de verrouillage en position de verrouillage, du type comportant un corps tubulaire externe (2) équipé, à l'une de ses extrémités (2"), de moyens (3) de raccordement rigide à une source de fluide sous pression et logeant un élément tubulaire (7) axialement mobile dans les deux sens et dont l'extrémité avant (7') correspondant à l'extrémité libre (2') du corps tubulaire (2), qui constitue l'embout femelle du coupleur, porte, dans une rangée annulaire de perforations (8) leur servant de logements, des billes de verrouillage (9) destinées à être engagées et maintenues dans une gorge annulaire externe (12) prévue, à cet effet, au voisinage de l'extrémité de l'embout mâle (11) associé du coupleur, un ressort de rappel (16) tendant à ramener cet élément tubulaire (7) dans une position intermédiaire stable dans laquelle la rangée annulaire de perforations (8) logeant les billes de verrouillage (9) coïncide axialement avec une nervure radiale interne (6) à flancs coniques (6a, 6b) du corps tubulaire (2) pour maintenir les billes (9) en position de verrouillage, c'est-à-dire en saillie radialement à l'intérieur de l'alésage de l'élément tubulaire mobile (7) et ce dernier portant, du côté de son extrémité arrière, un clapet (14) normalement maintenu en position de fermeture par un ressort (15) et destiné à être reculé en position ouverte par le clapet (13) de l'embout mâle (11), lorsque ce dernier est engagé dans l'embout femelle (7'), et dans lequel, pour le maintien de l'élément tubulaire interne (7) dans sa position intermédiaire stable, son ressort de rappel (16) entoure cet élément et est normalement précomprimé entre deux épaulements extérieurs opposés (21) et (23) de cet élément (7) et deux épaulements internes, opposés et à même distance l'un de l'autre que les premiers, prévus dans l'alésage du corps tubulaire (2), la position dans laquelle les deux paires d'épaulements intérieurs et extérieurs coïncident correspondant à la position de verrouillage des billes (9), caractérisé en ce que la partie de l'élément tubulaire mobile (7) comprise entre la rangée annulaire de perforations (8) logeant les billes de verrouillage (9) et l'épaulement externe le plus proche (23) de cet élément tubulaire (7), servant d'appui à l'extrémité avant de son ressort de rappel (16), est entourée par une douille cylindrique (24) présentant, à son extrémité arrière, c'est-à-dire la plus éloignée de la rangée de perforations (8), une collerette annulaire interne (25) placée entre l'épaulement externe avant (23) et l'extrémité avant du ressort de rappel (16) de manière à être normalement maintenue appliquée, par ce ressort (16), contre l'épaulement externe (23) de l'élément tubulaire mobile (7), dont l'autre extrémité, normalement maintenue en appui contre le flanc conique interne (6a) de la nervure interne (6) du corps (2), est biseautée intérieurement de façon à présenter une facette divergente (26), la longueur de la jupe cylindrique de cette douille (24) étant légèrement supérieure à la distance séparant l'épaulement considéré (23) de la circonférence des perforations (8) logeant les billes (9).

## Patentansprüche

Kupplung mit Ventilen, die die Rückkehr der Verriegelungskugeln in die Verriegelungsstellung erleichtern, mit einem ringförmigen Außenkörper (2), der an einem Ende (2') Mittel (3) zur starren Verbindung mit einer Quelle für unter Druck stehende Flüssigkeit aufweist und ein rohrförmiges Element (7) beherbergt, das in beiden Richtungen axial verschiebbar ist und dessen vorderes Ende (7') dem freien Ende (2') des die Buchse der Kupplung bildenden rohrförmigen Außenkörpers (2) entspricht, in einer ringförmigen Reihe von Öffnungen (8), die ihnen zur Aufnahme dienen, Verriegelungskugeln (9) trägt, die in eine ringförmige äußere Kehle (12) eingebracht und dort gehalten werden sollen, die zu diesem Zweck in der Nähe des Endes der der Kupplung zugeordneten Einsteckmuffe (12) vorgesehen ist, mit einer Rückholfeder (16), die das rohrförmige Element (7) in eine stabile Zwischenstellung vorspannt, in der die ringförmige Reihe von Öffnungen (8), in der sich die Verriegelungskugeln (9) befinden, axial mit einer mit konischen Flanken (6a, 6b) versehenen inneren Rippe (6) des rohrförmigen Außenkörpers (2) zusammenfällt, um die Verriegelungskugeln (9) in Verriegelungsstellung, d.h. in einer Stellung zu halten, in der sie radial ins Innere der Bohrung des beweglichen rohrförmigen Elements (7) hineinragen, wobei das rohrförmige Element (7) auf der Seite seines hinteren Endbereichs ein Ventil (14) trägt, das von einer Feder (15) normalerweise in Schließstellung gehalten wird und durch das Ventil (13) der Einsteckmuffe (11) in Öffnungsstellung zurückschiebbar ist, wenn die Einsteckmuffe (11) in die Buchse (7') eingreift, wobei zur Halterung des inneren rohrförmigen Elements (7) in seiner stabilen Zwischenstellung seine Rückholfeder (16) dieses Element umgibt und normalerweise zwischen zwei entgegengesetzten äußeren Schultern (21 und 23) dieses Elements (7) und zwei entgegengesetzten inneren Schultern vorgespannt ist, die in gleichem Abstand wie die äußeren Schultern in der Bohrung des rohrförmigen Außenkörpers (2) angeordnet sind, wobei die Stellung, in der die beiden Paare von inneren und äußeren Schultern zusammenfallen, der Verriegelungsstellung der Verriegelungskugeln entspricht, dadurch gekennzeichnet, daß der Teil des beweglichen rohrförmigen Elements (7), der zwischen der die Verrriegelungskugeln (9) aufnehmenden ringförmigen Reihe von Öffnungen (8) und der nächstliegenden äußeren Schulter (23) des rohrförmigen Elements (7) liegt, die dem vorderen Ende seiner Rückholfeder (16) als Abstützung dient, von einer Hülse umgeben ist, die an ihrem hinteren Ende, d.h. an dem von der Reihe von Öffungen (8) am weitesten entfernten Ende, einen ringförmigen inneren Kragen (25) aufweist, der zwischen der vorderen äußeren Schulter (23) und dem vorderen Ende der Rückholfeder (16) derart angeordnet ist, daß er normalerweise von dieser Rückholfeder (16) gegen die äußere Schulter (23) des beweglichen ringförmigen Elements (7) gehalten wird, dessen anderes Ende, das sich normalerweise gegen die innere konische Flanke (6a) der inneren Rippe (6) des Außenkörpers (2) abstützt, nach innen so abgeschrägt ist, daß es eine divergierende Facette (26) bildet, wobei die Länge des zylindrischen Mantels der Hülse (24) geringfügig größer ist als der Abstand zwischen der betrachteten Schulter (23) und dem Umkreis der die Verriegelungskugeln (9) aufnehmenden Öffnungen (8).

## Claims

A valve coupling for facilitating the return of locking balls into a locking position, of the type having an external tubular body (2) equipped, at one of its ends (2"), with means (3) for rigid connection to a source of fluid under pressure and housing a tubular element (7) which is axially movable in both directions and of which the forward end (7') corresponding to the free end (2') of the tubular body (2), which constitutes the female end portion of the coupling, carries, in an annular row of openings (8) acting as housings, locking balls (9) intended to be engaged and held in an external annular groove (12) provided for this purpose in the region of the end of the associated male end portion (11) of the coupling, a return spring (16) tending to return this tubular element (7) into a stable intermediate position in which the annular row of openings (8) housing the locking balls (9) coincides axially with an internal radial rib (6) of the tubular body (2) having conical sides (6a, 6b) to hold the balls (9) in the locking position, i.e. projecting radially inwardly of the bore of the movable tubular element (7) and this latter carrying, at the side adjacent its rear end, a valve (14) which is normally held in the closed position by a spring (15) and intended to be returned to the open position by the valve (13) of the male end portion (11), when this latter is engaged in the female end portion (7'), and in which, in order to hold the internal tubular element (7) in its stable intermediate position, its return spring (16) surrounds this element and is normally precompressed between two opposed external shoulders (21) and (23) of this element (7) and two internal shoulders, which are opposed and at the same distance from each other as the first ones, provided in the bore of the tubular body (2), the position in which the two pairs of internal and external shoulders coincide corresponding to the locking position of the balls (9), characterised in that the portion of the movable tubular element (7) comprised between the annular row of openings (8) housing the locking balls (9) and the external shoulder (23) closest to the tubular element (7) acting as a bearing for the forward end of its return spring (16) is surrounded by a cylindrical sleeve (24) having, at its rear end, i.e. the one furthest from the row of openings (8), an internal annular collar (25) located between the forward external shoulder (23) and the forward end of the return spring (16) so as normally to be held by the spring (16) against the external shoulder (23) of the movable tubular element (7), the other end of which, normally held against the internal conical side (6a) of the internal rib (6) of the body (2), is internally chamfered so as to have a divergent surface (26), the length of the cylindrical skirt of this sleeve (24) being slightly greater than the distance separating the relevant shoulder (23) from the circumference of the openings (8) housing the balls (9).

FIG.1

FIG.2

FIG.3

FIG.4

EP 0 203 876 B1